# EUROPÄISCHE PATENTANMELDUNG

(11) **EP 1 206 095 A2**
(43) Veröffentlichungstag der Anmeldung: **15.05.2002**
(21) Anmeldenummer: 01125222.8
(22) Anmeldetag: 24.10.2001
(51) Int. Cl.: H04L 25/49

(54) **Verfahren zur Übertragung eines digitalisierten Signals, Datenquelle und Datensenke zur Ausführung des Verfahrens**

(30) Priorität: 10.11.2000 DE 10055939
(71) Anmelder: BECKER GmbH, 76307 Karlsbad (DE)
(72) Erfinder: Stiegler, Andreas, 76275 Ettlingen (DE); Schöpp, Harald, 76272 Ettlingen (DE); Bähren, Frank, 76133 Karlsruhe (DE)
(74) Vertreter: Patentanwälte Westphal, Mussgnug & Partner

(57) **Zusammenfassung**

Ein Sprachsignal wird in einem MOST-Netzwerk auf einem einzigen Kanal übertragen. Dazu ist vorzugsweise die Breite der übertragenen Sprachdatenwörter auf 14 Bit beschränkt, und jedes Sprachdatenwort wird in zwei aufeinanderfolgenden Taktperioden des MOST-Netzwerks in einem Byte übertragen, das sieben Bits des Sprachdatenworts und ein Kennzeichenbit umfaßt.

## Beschreibung

Die vorliegende Erfindung betrifft ein Verfahren zum Übertragen eines digitalisierten Signals in einem Datenübertragungssystem sowie eine Datenquelle und -senke für ein solches System.

Bei der Übertragung digitalisierter Signale, insbesondere in Echtzeit, stellt sich oft das Problem, daß die Erzeugungsrate der digitalisierten Daten und ihre Auflösung, d.h. die Bitzahl ihrer Datenwerte, schlecht an die Übertragung auf einer vorgegebenen Übertragungsinfrastruktur angepaßt sind. Viele Datenübertragungssysteme, insbesondere gemultiplexte Systeme, verwalten ihre Übertragungskapazität in Form von Kanälen, die durch eine Arbeitsfrequenz und eine Wortbreite gekennzeichnet sind. Ist diesde Wortbreite kleiner als die eines zu übertragenden digitalisierten Kanals, so müssen mehrere Kanäle für die Übertragung des Signals bereitgestellt werden, auch wenn die pro Zeiteinheit zu übertragende Datenmenge möglicherweise in einem Kanal Platz fände.

Ein typisches Beispiel für dieses Problem ist die Übertragung von Sprachsignalen auf einem MOST-Bussystem. Die Abkürzung MOST steht für "Media Orientated System Transport" und bezeichnet ein optisches Bussystem, das insbesondere in Kraftfahrzeugen für die Übertragung von Daten zum Einsatz kommt, die nicht unmittelbar für den Betrieb des Kraftfahrzeugs spezifisch sind. Derartige Daten können z.B. Audio- und/oder Videosignale, z.B. eines Autoradios oder Autotelefons, oder Navigationssignale, z.B. eines GPS-Systems, sein.

Die MOST-Spezifikation sieht ein Bussystem mit Ringstruktur für synchrone Datenübertragung mit einem einheitlichen Systemtakt von 44,1 kHz vor. Mit dieser Frequenz werden auf dem Ringbus sogenannte Frames übertragen, die jeweils eine Vielzahl von Bytes enthalten. Diese jeweils mit dem Systemtakt von 44,1 kHz wiederkehrenden Bytes werden auch als Kanäle bezeichnet. Jede an den Ringbus angeschlossene Datenquelle nutzt eine gegebene Zahl von solchen Kanälen, um Daten zu senden und/oder zu empfangen.

Für die Übertragung von Audiosignalen sind laut MOST-Spezifikation vier Bytes pro Rahmen, d.h. vier Kanäle vorgesehen. Diese Bandbreite ist für eine hochwertige Stereoübertragung beliebiger Audiosignale erforderlich, für die Übertragung von menschlicher Sprache genügt aber aufgrund ihres beschränkten Frequenzspektrums eine geringere Übertragungskapazität. Insbesondere wenn es sich um eine Telefon-Sprachsignal handelt, das monophon übertragen wird, sind die auf dem MOST-Bus übertragenen Daten jeweils paarweise gleich. Das bedeutet, daß der MOST-Bus bei Sprachübertragung nicht effizient genutzt wird.

Um die Nutzung der Übertragungskapazität eines Übertragungssystems in dem Fall zu optimieren, daß Arbeitsfrequenz und Kanalbreite des Systems einerseits und Wortfrequenz und -breite des digitalisierten Signals nicht aufeinander abgestimmt sind, wird ein Verfahren mit dem Merkmal des Anspruchs 1 vorgeschlagen. Indem die Datenwörter des digitalisierten Signals in Teilwörter mit einer geringeren Breite als der der Kanäle, auf denen sie übertragen werden müssen, zerlegt werden, bleibt in jedem einzelnen Kanal eine Rest-Übertragungskapazität frei, die es ermöglicht, für jedes einzelne übertragene Teildatenwort eine Kennzeichnung zu übertragen, die einer an das Übertragungssystem angeschlossenen Senke Auskunft über die Stellung des betreffenden Teildatenwortes in einem ursprünglichen Datenwort gibt.

Vorzugsweise umfaßt diese Kennzeichnung genau ein Bit. Auch wenn die Zahl der Teildatenwörter, in die jedes ursprüngliche Datenwort zerlegt wird, größer als zwei sein sollte, ist ein einziges Bit ausreichend, um z.B. jedes erste oder jedes letzte Teildatenwort von allen anderen Teildatenwörtern eines Datenwortes zu unterscheiden und so der Senke einen Fixpunkt zu liefern, von dem aus sie mit der Rekonstruktion der ursprünglichen Datenwörter beginnen kann.

Eine bevorzugte Anwendung des Verfahrens ist ein Übertragungssystem, bei dem das Verhältnis a von Arbeitsfrequenz des Kanals zur Wortfrequenz des digitalisierten Signals 2 beträgt. Wenn darüber hinaus eine Breite m der Kanäle von 8 Bit angenommen wird, so ist das Verfahren ausgezeichnet geeignet zur ökonomischen Übertragung von Sprachsignalen in einem MOST-Netzwerk.

MOST-Netzwerke arbeiten gegenwärtig mit einer Arbeitsfrequenz bzw. Frame-Frequenz von 44,10 kHz. Für eine verfälschungsfreie Abtastung eines analogen Signals ist eine Abtastfrequenz erforderlich, die mindestens doppelt so hoch ist wie der Spektralanteil mit der höchsten Frequenz des abzutastenden Signals. Da das Frequenzspektrum der menschlichen Sprache nicht über 11 kHz hinausreicht, ist für die Anwendung eine Abtastung mit der halben Frame-Frequenz des MOST-Netzwerks, d.h. 22,05 kHz, ausreichend.

Handelsübliche AD-Wandler haben häufig eine Auflösung von 12 oder 16 Bit. Datenwörter eines digitalisierten Signals mit 12 Bit Breite wären zwar problemlos einschließlich einer Kennzeichnung auf zwei Kanälen eines Übertragungssystems von je 8 Bit Breite zu übertragen, allerdings bliebe dabei ein Teil der Übertragungskapazität des Systems ungenutzt. Eine vollständige Ausnutzung der Übertragungskapazität wird erreicht, wenn die Datenwörter eine Breite von 14 Bit haben. Ein solches digitalisiertes Signal ist mit Hilfe gängiger und preiswerter 16 Bit-Wandler erzeugbar, indem zunächst mit einer Breite von 16 Bit gewonnene Abtastwerte auf eine Breite von 14 Bit gerundet werden.

Die Umformung eines 16-Bit-Abtastwerts in für die Übertragung geeignete Teildatenwörter mit Kennzeichnung erfolgt in einfacher Weise dadurch, daß die Bits 2 bis 8 des 16-Bit-Abtastwerts um ein Bit nach rechts verschoben werden (wobei die Bits des Abtastwerts in Richtung zunehmender Signifikanz von 0 bis 15 durchnumeriert sind). So wird ein transformiertes Datenwort erhalten, dessen Bits 15 bis 9 mit denen des ursprünglichen Abtastwerts übereinstimmen, wohingegen die Bits 7 bis 1 jeweils die Werte der Bits 8 bis 2 des Abtastwerts haben. Die Bits 8 und 0 werden jeweils auf den Wert 1 bzw. 0 gesetzt. Die zwei Bytes, aus denen das transformierte Datenwort besteht, können nun auf einem Kanal in zwei aufeinanderfolgenden Frames übertragen werden, wobei einer das signifikantere Byte mit den Bits 15 bis 8 und einer das weniger signifikante Byte mit den Bits 7 bis 0 enthält. Die jeweils niedrig signifikanten Bits dieser zwei Bytes kennzeichnen durch ihren Wert 1 oder 0 jedes Byte als erstes bzw. zweites Teilwort.

Bei der Wiederherstellung der übertragenen Daten an der Senke wird die Verschiebungsoperation rückgängig gemacht. Dabei erkennt die Senke am niedrigstsignifikanten Bit jedes empfangenen Bytes, ob es sich um das höher oder geringer signifikante Byte des transformierten Datenworts handelt und ist so in der Lage, das transformierte Datenwort mit der korrekten Reihenfolge der Bytes wiederherzustellen.

Die Senke empfängt somit Abtastwerte eines Sprachsignals mit der halben Taktrate des MOST-Netzwerks. Um Abtastwerte mit der vollen MOST-Taktrate von 44,1 kHz an eine nachgeordnete Einheit weitergeben zu können, gibt die Senke einfach jeden empfangenen Datenwert des Sprachsignals zweimal aus.

Um eine Verfälschung des von der nachgeordneten Einheit empfangenen Sprachsignals zu vermeiden bzw. zu begrenzen, gibt die Senke das Sprachsignal zweckmäßigerweise über einen Tiefpaßfilter aus.

Eine insbesondere zur Durchführung eines Verfahrens der oben beschriebenen Art geeignete Datenquelle für ein MOST-Netzwerk umfaßt eine Logikschaltung zum Verschieben der Bits 2 bis 8 eines 16 Bit-Datenworts der Sprachdaten um ein Bit nach rechts und zum Eintragen einer Kennzeichnung als erstes bzw. zweites Teilwort in das jeweils niedrig signifikante Bett der zwei Bytes des dadurch erhaltenen Datenworts.

Komplementär dazu ist eine Datensenke gekennzeichnet durch eine Logikschaltung zum Rekombinieren von zwei empfangenen Bytes der Sprachdaten zu einem 16 Bit breiten Datenwort und zum Verschieben des niedrig signifikanten Bytes des Datenworts um ein Bit nach links.

Weitere Merkmale und Vorteile der Erfindung ergeben sich aus der nachfolgenden Beschreibung eines Ausführungsbeispiels mit Bezug auf die beigefügten Figuren.

Es zeigen:
Fig. 1 schematisch ein MOST-Ringnetzwerk, in dem die vorliegende Erfindung anwendbar ist;
Fig. 2 die Verarbeitung der Abtastdaten in einer Quelle und einer Senke des MOST-Netzwerks vor bzw. nach dem Übertragen auf den Ringbus;
Fig. 3 stark schematisiert den Aufbau einer Datenquelle und
Fig. 4 analog zu Figur 3 den Aufbau einer Datensenke.

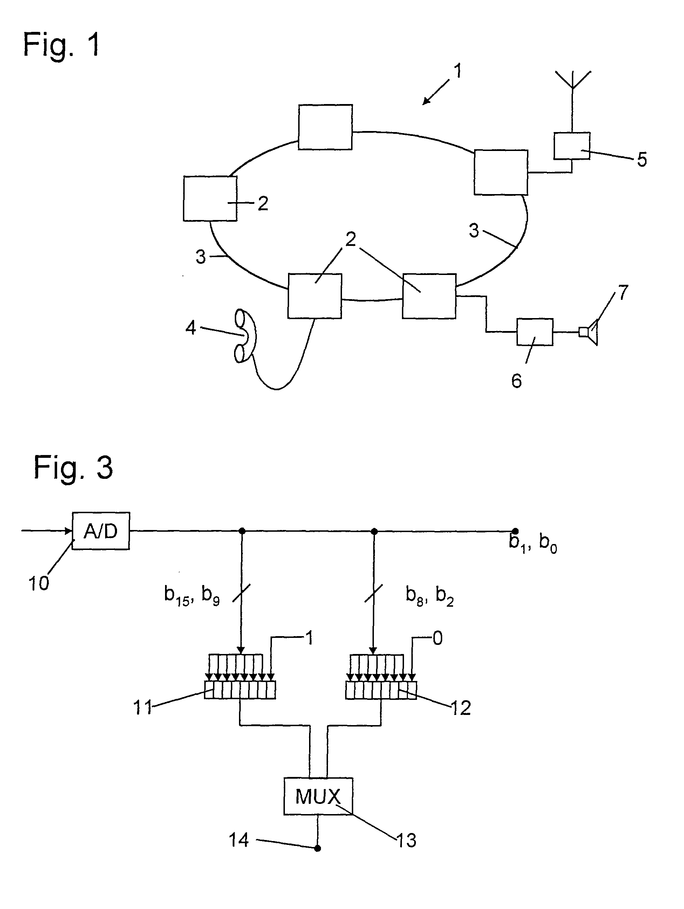

Fig. 1 zeigt schematisch ein MOST-Netzwerk, in dem die vorliegende Erfindung anwendbar ist. Das Netzwerk umfaßt einen ringförmigen Bus 1, dessen Teilstücke 3 jeweils Schnittstelleneinheiten 2 miteinander verbinden, die als Quellen oder Senken von Daten fungieren können bzw. nicht für sie bestimmte Daten transparent weiterleiten. An die Schnittstelleneinheiten 2 können diverse datenverarbeitende Geräte wie z.B. der Computer eines Navigationssystems, ein Rundfunk- oder Fernsehempfänger oder dergleichen, oder, wie hier dargestellt, der Handapparat 4 eines Mobiltelefons und eine Funk-Sender/Empfängereinheit 5 angeschlossen sein. Sowohl Radio, Rundfunk- oder Fernsehempfänger als auch eine Freisprecheinrichtung des Mobiltelefons können sich über den Bus 1 den Zugriff auf einen Verstärker 6 mit angeschlossenem Lautsprecher 7 teilen. Der Handapparat 4 und die Sende/Empfängereinheit 5 tauschen untereinander und, gegebenenfalls über die Freisprecheinrichtung mit dem Verstärker 6 Sprachsignale aus.

Im folgenden wird das erfindungsgemäße Verfahren der Übertragung der Sprachsignale auf den Bus 1 anhand des Beispiels der Übertragung vom Handapparat 4 zur Sende/Empfängereinheit 5 betrachtet, wobei es sich versteht, daß eine entsprechende Übertragung auch in Gegenrichtung bzw. vom Handapparat 4 oder der Sende/Empfängereinheit 5 zu dem Verstärker 6 möglich ist.

Der Handapparat 4 liefert ein abgetastetes Sprachsignal in Form von 16 Bit breiten Datenwörtern mit einer Taktrate von 22,05 MHz, entsprechend der halben Frame-Frequenz des MOST-Busses, an seine Schnittstelleneiheit 2. Die Frequenzen stehen somit zueinander im Verhältnis a = 2.

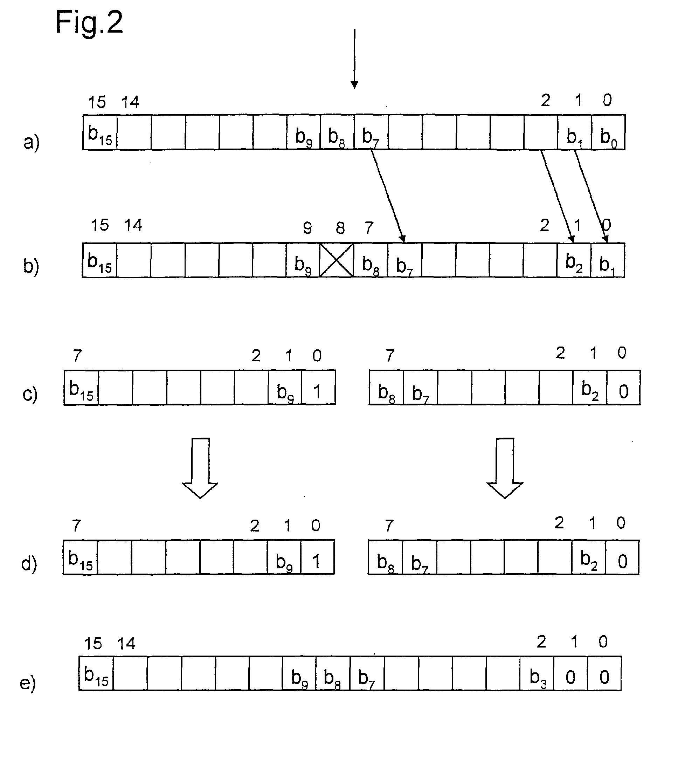

Zeile a der Figur 2 zeigt ein solches Datenwort mit Bits 0 bis 15, die jeweils die Werte b₀ bis b₁₅ enthalten. Die Bits sind in der Reihenfolge zunehmender Signifikanz numeriert.

Zeile b zeigt 'einen ersten Schritt der von der Schnittstelleneinheit 2 durchgeführten Vorbereitung des Datenworts an seine Übertragung auf den Bus 1. Die Bits 15 bis 9 sind unverändert, die Inhalte der Bits 8 bis 1 sind um ein Bit nach rechts verschoben. Der Inhalt des Bits 8 ist nicht festgelegt, was durch ein Kreuzchen in dem entsprechenden Kasten angedeutet ist.

Anschließend wird das Bit 8 gleich 1 gesetzt, und der Inhalt des Bits 0 wird mit 0 überschrieben. Zeile c zeigt das dadurch erhaltene transformierte Datenwort aufgeteilt in zwei Bytes, die jeweils ein 7 Bit breites Teilwort des ursprünglichen Datenworts in den Bits 7 bis 1 und die Kennzeichnung des Teilworts als mehr oder weniger signifikanter Teil des ursprünglichen Datenworts im Bit 0 enthalten. Diese zwei Datenwörter werden in aufeinanderfolgenden Frames auf den Bus 1 übertragen. Es ist per Konvention festzulegen, welches der Teilwörter als erstes übertragen wird.

Anhand der Bits 0 erkennt die als Senke fungierende Schnittstelleneinheit 2 der Sender/Empfängereinheit 5, ob das empfangene Byte das signifikantere oder das weniger signifikante Byte eines transformierten Datenworts ist, und anhand der Konvention ist sie in der Lage, die Datenwörter in der ursprünglichen Form wiederherzustellen. Dieser Zustand ist symbolisch in Zeile d dargestellt.

Durch eine Verschiebung der Bits 7 bis 1 des weniger signifikanten Datenworts mit den Inhalten b₈ bis b₂ um ein Bit nach links wird (in Zeile e) die ursprüngliche Reihenfolge der Bits b₁₅ bis b₂ wiederhergestellt. Die Bits b₁ und b₀ sind verlorengegangen und werden durch Nullen ersetzt. Auf diese Weise empfängt die Sender/Empfängereinheit 5 ein vollständiges Datenwort mit einer Frequenz von 22,05 kHz.

Der Verstärker 6 ist ausgelegt für den Empfang allgemeiner Audiosignale auf 4 Kanälen des MOST-Busses mit der vollen Frame-Frequenz von 44.1 MHz. Um die Zusammenwirkung des Verstärkers mit der Sender-/Empfängereinheit 5 zu ermöglichen, die Datenwörter nur mit der halben Frame-Frequenz liefert, gibt die Schnittstelleneinheit 2 des Verstärkers jedes empfangene Datenwort eines Sprachsignals zweimal an der Verstärker 6 aus. Um Aliasing-Effekte durch die wiederholte Ausgabe des gleichen Wertes zu vermeiden, ist ein Tiefpaßfilter zwischen die Schnittstelleneinheit und den Verstärker geschaltet.

In vielen Fällen ist mit der Nutzung eines solchen Filters kein zusätzlicher Schaltaufwand verbunden. Bei den Geräten, wie dem Verstärker 6, die das Sprachsignal mit dem vollen Systemtakt von 44,1 kHz benötigen, handelt es sich in der Praxis in der Regel um solche Geräte, die auch zur Verarbeitung allgemeiner Audiosignale mit der spezifizierten Übertragungsbandbreite von vier Kanälen dienen. Solche Geräte verfügen in der Regel über digitale Signalprozessoren zur Realisierung von Klangstellern, die auch als Eingangsfilterstufen zur Alias-Unterdrückung konfigurierbar sind.

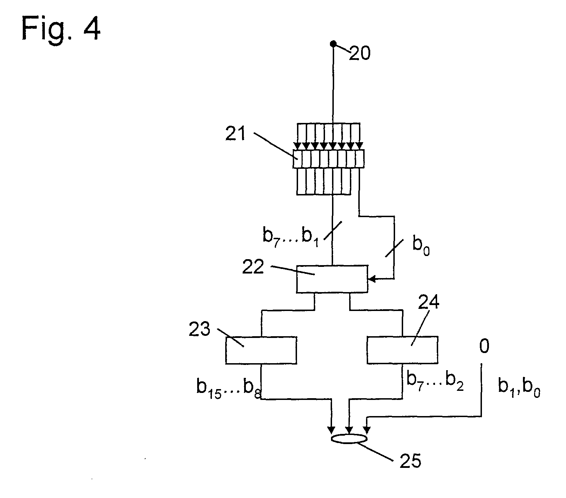

Figur 3 zeigt schematisch den Aufbau einer Datenquelle gemäß der Erfindung. Sie umfaßt einen AD-Wandler 10, der ein analoges Sprachsignal empfängt und Abtastwerte von 16 Bit Breite mit einer Frequenz von 22,05 kHz liefert. Das 16 Bit breite Ausgangssignal des AD-Wandlers 10 wird aufgeteilt in Bits b₁₅ bis b₉ bzw. b₈ bis b₂, die jeweils in den sieben signifikantesten Bits zweier Schieberegister 11, 12 zwischengespeichert werden. Der niedrigsignifikante Eingang des Schieberegisters 11 liegt konstant auf dem Pegel Logisch 1, der des Schieberegisters 12 auf Logisch 0. Die Ausgänge der Schieberegister 11, 12 sind mit den Eingängen eines Multiplexers 13 verbunden, der in jedem Arbeitstakt des AD-Wandlers 10 jeweils einmal die Schieberegister 11 und einmal die Schieberegister 12 an den Ausgang 14 durchschaltet. Die Schaltung liefert so Datenbytes mit einer Rate von 44,1 kHz, die jeweils abwechselnd die Bits 15 bis 9 bzw. 8 bis 2 eines digitalisierten Datenworts enthalten.

Komplementär dazu weist die Datensenke an ihrem Eingang 20 zunächst ein Register 21 zum Puffern der eintreffenden Bytes auf. Dateneingänge eines Demultiplexers 22 sind an die sieben signifikanteren Ausgänge des Registers 21 angeschlossen, wohingegen der niedrig signifikante Ausgang des Registers 21 an den Steuereingang des Demultiplexers 22 angeschlossen ist. Je nach Wert des niedrig signifikanten Bytes gibt der Demultiplexer somit die empfangenen Daten an eines von zwei Registern 23, 24 aus. Das Register 23 liefert die signifikanteren Bits b₁₅ bis b₉ des 16 Bit breiten Ausgangs 25 der Senke, das Register 24 liefert die weiteren Bits b₈ bis b₂, und die Bits b₁, b₂ liegen konstant auf 0.

Die Erfindung ist oben speziell mit Bezug auf Sprachübertragung in einem MOST-Netzwerk beschrieben worden. Im Lichte der oben gegebenen Beschreibung dürfte jedoch klar sein, daß die Erfindung zur Übertragung von beliebigen digitalisierten Signalen mit einer Wortbreite von n Bit auf (je nach Verhältnis von Abtastfrequenz zu Arbeitsfrequenz einem oder mehreren) Kanälen eines Übertragungssystems mit einer Breite von m Bit anwendbar ist, die kleiner als die Wortbreite n ist.

## Patentansprüche

1. Verfahren zum Übertragen eines mit einer Abtastfrequenz digitalisierten Signals mit einer Wortbreite von n Bit von einer Quelle (2) an eine Senke (2) in einem Datenübertragungssystem mit einer Arbeitsfrequenz, das wenigstens einen Kanal mit einer Breite von m Bit aufweist, wobei n>m ist und die Arbeitsfrequenz größer als die Abtastfrequenz ist, **dadurch gekennzeichnet, daß** jedes Datenwort des Signals in wenigstens zwei Teilwörter mit einer Breite zerlegt wird, die kleiner ist als m, und daß wenigstens zwei aus einem Datenwort erhaltene Teilwörter auf dem Kanal zusammen mit einer Kennzeichnung übertragen werden, die die Stellung eines Teilwortes im ursprünglichen Datenwort charakterisiert.

2. Verfahren nach Anspruch 1, **dadurch gekennzeichnet, daß** nach Übertragung auf dem wenigstens einen Kanal das ursprüngliche Datenwort aus den Teildatenwörtern anhand der Kennzeichnung rekonstruiert wird.

3. Verfahren nach Anspruch 1 oder 2, **dadurch gekennzeichnet, daß** die Kennzeichnung ein Bit umfaßt.

4. Verfahren nach Anspruch 1 oder 2, **dadurch gekennzeichnet, daß** wenn die Arbeitsfrequenz wenigstens das a-fache der Abtastfrequenz und weniger als das a-1-fache beträgt, wobei a eine ganze Zahl ist, bis zu a Teildatenwörter eines Datenworts auf einem Kanal übertragen werden.

5. Verfahren nach Anspruch 4, **dadurch gekennzeichnet, daß** a=2 ist.

6. Verfahren nach einem der vorhergehenden Ansprüche, **dadurch gekennzeichnet, daß** n=14 und m=8 ist.

7. Verfahren nach Anspruch 6, **dadurch gekennzeichnet, daß** jedes Datenwort durch Runden auf 14 Bit eines mit einer Auflösung von 16 Bit abgetasteten analogen Signals erhalten wird.

8. Verfahren nach Anspruch 7, **dadurch gekennzeichnet, daß** zur Reduzierung der Breite die Bits 2 bis 8 des 16-Bit-Datenworts um ein Bit nach rechts verschoben werden, und daß in das jeweils niedrigstsignifikante Bit der dadurch erhaltenen zwei Bytes die Kennzeichnung als erstes bzw. zweites Teilwort eingetragen wird.

9. Verfahren nach einem der vorhergehenden Ansprüche, **dadurch gekennzeichnet, daß** das digitalisierte Signal durch Abtasten von gesprochener Sprache gewonnen wird.

10. Verfahren nach Anspruch 9, **dadurch gekennzeichnet, daß** in der Senke (2) die zwei Teilwörter durch Verschieben des niedrigsignifikanten Bytes um ein Bit nach links zu dem ursprünglichen Datenwort rekombiniert werden.

11. Verfahren nach Anspruch 10, **dadurch gekennzeichnet, daß** die zwei niedrigstsignifikanten Bits des rekombinierten Datenworts auf einen vorgegebenen Wert gesetzt werden.

12. Verfahren nach einem der vorhergehenden Ansprüche, **dadurch gekennzeichnet, daß** die Senke (2) ein digitales Signal mit der Arbeitsfrequenz weitergibt, indem sie jedes empfangene Datenwort mehrfach ausgibt.

13. Verfahren nach Anspruch 12, **dadurch gekennzeichnet, daß** die Senke das digitale Signal über ein Tiefpaßfilter weitergibt.

14. Verfahren nach einem der vorhergehenden Ansprüche, **dadurch gekennzeichnet, daß** das Datenübertragungssystem ein MOST-Netzwerk ist.

15. Datenquelle zum Senden eines digitalisierten Signals mit einer Wortbreite von n Bits in einem Datenübertragungssystem, das wenigstens einen Kanal mit einer Breite von m Bit aufweist, wobei n>m ist, **gekennzeichnet durch** eine Logikschaltung (11, 12, 13) zum Zerlegen jedes Datenworts in eine Mehrzahl von Teilwörtern mit einer Breite von weniger als m Bits und zum Hinzufügen einer die Stellung des Teildatenworts charakterisierenden Kennzeichnung zu wenigstens einem der erhaltenen Teilwörter.

16. Datenquelle nach Anspruch 15, **dadurch gekennzeichnet, daß** die Logikschaltung eingerichtet ist zum Verschieben der Bits 2 bis 8 eines 16-Bit-Datenworts des digitalisierten Signals um ein Bit nach rechts und zum Eintragen einer Kennzeichnung als erstes bzw. zweites Teilwort in das jeweils niedrigstsignifikante Bit der zwei Bytes des dadurch erhaltenen Datenworts.

17. Datensenke zum Rekonstruieren eines digitalisierten Signals mit einer Wortbreite von n Bits anhand von auf einem m Bit breiten Kanal eines Datenübertragungssystems übertragenen Daten, wobei n>m ist, **gekennzeichnet durch** eine Logikschaltung (21, 22, 23, 24) zum Zerlegen jedes empfangenen Datenwerts in ein Teilwort von weniger als m Bit Breite und eine Kennzeichnung und Rekombinieren von Teilwörtern zu einem ursprünglichen Datenwort des digitalisierten Signals anhand der Kennzeichnung.

18. Datensenke nach Anspruch 17, **dadurch gekennzeichnet, daß** die Logikschaltung eingerichtet ist zum Kombinieren von zwei empfangenen Datenwerten von m=8 Bit Breite zu einem 16 Bit breiten Datenwort und zum Verschieben des niedrigsignifikanten Bytes des Datenworts um ein Bit nach links.

19. Datensenke nach Anspruch 18, **gekennzeichnet durch** Mittel zum Setzen der zwei niedrigstsignifikanten Bits des rekombinierten Datenworts auf einen vorgegebenen Wert.

20. Datensenke nach Anspruch 17, 18 oder 19, **dadurch gekennzeichnet, daß** sie jedes rekombinierte Datenwort mehrfach, insbesondere zweimal, ausgibt.

21. Datensenke nach einem der Ansprüche 11 bis 13, **gekennzeichnet durch** ein Tiefpaßfilter für die rekombinierten Datenwörter.
